# EUROPEAN PATENT APPLICATION

(11) **EP 4 647 171 A1**
(43) Date of publication of application: **12.11.2025**
(21) Application number: 25174947.9
(22) Date of filing: 08.05.2025
(51) Int. Cl.: B02C 13/14, B02C 13/16, B02C 13/282, B02C 13/284, A23N 17/00

(54) **MILL FOR THE PRODUCTION OF ANIMAL FEED**

(30) Priority: 08.05.2024 IT 202400010324
(71) Applicant: Bianchini, Paola, 42019 Scandiano (RE) (IT)
(72) Inventor: Bianchini, Paola, 42019 Scandiano (RE) (IT)
(74) Representative: Brunacci, Marco

(57) **Abstract**

The mill for the production of animal feed comprises one frame, a loading assembly connected to the frame and defining at least one loading port of the raw material and one grinding assembly mounted on the frame. The grinding assembly comprises one grinding chamber for raw material to obtain food in granular form, one driving shaft fitted within the grinding chamber and operable in rotation around a vertical axis of rotation and one crushing rotor housed within the grinding chamber and associable locked together in rotation with the driving shaft and a mixing chamber in fluid communication with the grinding chamber and the loading assembly. The mixing chamber being configured to receive the raw material from the loading assembly and to send a raw material mixed to the grinding chamber.

## Description

### Technical Field

The present invention relates to a mill for the production of animal feed. Specifically, to a vertical mill that allows mixing and grinding a raw material for obtaining animal feed.

### Background Art

A variety of mills for the production of animal feed are known to be widely used in the field of animal fodder with the purpose of grinding one or more raw materials in order to obtain animal feed in a granular form, such as feed.

Generally, the mills of known type comprise a supporting frame, on which is mounted a grinding chamber adapted to grind the raw materials required for the production of one or more animal feeds.

Specifically, the grinding of the raw materials introduced within the grinding chamber is carried out by means of a crushing rotor arranged within the grinding chamber and locked together in rotation with a driving shaft adapted to rotate around a horizontal axis of rotation that develops within the same grinding chamber.

In addition, the grinding chamber comprises a loading port for the raw material to be ground arranged above the crushing rotor, and an unloading grid arranged below the same, and through which the ground raw material is extracted once it reaches a predefined particle size.

In this way, the raw material remains within the grinding chamber until, through the grinding process, it reaches a particle size that allows it to pass through the unloading grid and then to be collected within an appropriate container.

Generally, the crushing rotors employed by the mills of this type comprise a fixed body locked together in rotation with the driving shaft and a plurality of crushing elements which are coupled kinematically idle to the fixed body and movable in rotation around an axis of hinging substantially parallel to the horizontal axis of rotation.

In this way, when the driving shaft is set in rotation at a constant speed, the crushing elements are arranged radially with respect to the horizontal axis of rotation to substantially occupy the entire volume of the grinding chamber, so as to grind the raw material contained within the same.

Specifically, the fixed body generally comprises a set of retaining plates arranged parallel to each other along the horizontal axis of rotation and between which one or more of the crushing elements are pivoted free to rotate.

In this way, worn out or damaged crushing elements, e.g. as a result of continuous grinding processes, can be replaced with new crushing elements without making it necessary to replace the fixed body.

In addition, this expedient makes it possible to limit the negative effects on the crushing rotor as a result of the impacts of the crushing elements with the raw material to be ground.

In fact, the type of coupling between the crushing elements and the fixed body makes it possible to convert and dissipate the energy generated by the impact of the crushing elements with the raw material into rotational kinetic energy from the crushing elements themselves, thus reducing the energy absorbed by the fixed body.

These expedients significantly reduce wear and tear on the crushing rotor, thus decreasing the maintenance costs of the mill itself.

The mills of this type are, however, subject to further refinements related to their structural characteristics.

Specifically, in the mills of known type, the driving shaft is provided with two ends which are associated movable in rotation with the inner walls of the grinding chamber and with the supporting frame, so as to keep the crushing rotor suspended within the chamber itself and free to rotate around the horizontal axis of rotation.

Consequently, replacement of a component of the crushing rotor or of the rotor itself requires that the driving shaft be disassembled from the supporting frame and removed from the grinding chamber.

Moreover, with particular reference to the stopping phase of the driving shaft, the crushing rotor is particularly affected by the inertia of the crushing elements, on which the weight force acts in addition to the centrifugal force generated by the rotation of the driving shaft.

In fact, in the stopping phase, some of the crushing elements, which are generally very heavy to ensure the grinding of the raw material, tend to stop their stroke by striking the fixed body with a non-negligible force.

Consequently, as a result of the succession of the grinding processes, it happens very frequently that the center of gravity of the crushing rotor is off-center with respect to the horizontal axis of rotation due to the repeated impacts between the fixed body and the crushing elements.

This phenomenon negatively affects the rotation of the driving shaft which does not perfectly rotate aligned with the horizontal axis of rotation, significantly increasing the mechanical stress on the mill structure.

The drawbacks listed above significantly contribute to increased wear and tear on the mechanical parts of the mill, in this case the driving shaft and the crushing rotor, and at the same time make it difficult and complicated to maintain the same with a significant increase in maintenance costs.

An additional drawback of the mills of known type lies in the fact that the production of animal feed is particularly limited by the small extension of the unloading grid.

In fact, in this type of mills, the extension of the unloading grid is limited to defining the bottom wall of the grinding chamber, that is, the wall facing the ground, at which the raw material tends to naturally accumulate due to gravity.

However, in this way, the unloading grid operates as a bottleneck that limits the output of ground raw material, significantly reducing the amount of food produced in a predefined time.

### Description of the Invention

The main aim of the present invention is to devise a mill for the production of animal feed which allows carrying out convenient and quick maintenance operations of the driving shaft and of the crushing rotor.

A further object of the present invention is to devise a mill for the production of animal feed which allows drastically reducing wear and tear on the crushing rotor.

An additional object of the present invention is to devise a mill for the production of animal feed which, for the same size of the grinding chamber and of the crushing rotor, allows increasing the amount of animal feed produced in a predefined time compared to the mills of known type.

Another object of the present invention is to devise a mill for the production of animal feed which allows the aforementioned drawbacks of the prior art to be overcome within the framework of a simple, rational, easy and effective to use as well as affordable solution.

The aforementioned objects are achieved by this mill for the production of animal feed having the characteristics of claim 1.

### Brief Description of the Drawings

Some embodiments and aspects of the invention will be described below with reference to the attached drawings, provided for illustrative purpose only and therefore not as a limiting example, in which:
Figure 1 is a schematic axonometric view of the mill according to the invention;
Figure 2 is a schematic detailed view of some elements of the mill according to the invention;
Figure 3 is a schematic exploded view of the mill according to the invention;
Figure 4 is a schematic cross-sectional view of some elements of the mill according to the invention;
Figure 5 is a schematic cross-sectional view of some elements of the mill according to the invention;

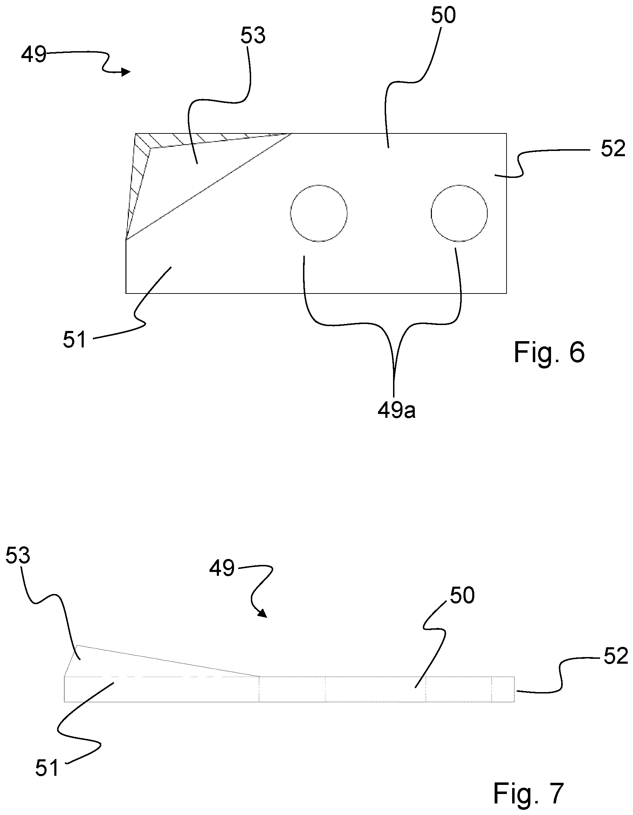

Figure 6 is a schematic view from above in partial cross-section of a detail of the mill in accordance with this description;
Figure 7 is a schematic side view of the detail in Figure 6.

### Embodiments of the Invention

With particular reference to these figures, reference numeral 1 globally denotes a mill for the production of animal feed.

The mill 1 for the production of animal feed comprises:
- at least one supporting frame 2;
- at least one grinding assembly 3, 4, 5, 16 mounted on the supporting frame 2 and provided with:
   - at least one grinding chamber 3 for grinding at least one raw material to obtain food in granular form;
   - at least one driving shaft 4 fitted at least partly within the grinding chamber 3 and operable in rotation around an axis of rotation A;
   - at least one crushing rotor 5 housed within the grinding chamber 3 and locked together in rotation with the driving shaft 4.

In particular, the axis of rotation A is vertical.

In the remainder of the following disclosure, the term "vertical" employed with reference to one or more elements of the mill 1 is intended to denote the layout in space of these elements under the conditions of standard use of the mill 1, i.e., as shown in the figures, the conditions under which the driving shaft 4 is arranged substantially vertical with respect to the ground on which the supporting frame 2 rests in use.

In addition, the terms "above" or "below" and the terms derivable from the latter employed with reference to one or more elements of the mill 1 are intended to indicate the mutual position of these elements with respect to the ground.

In other words, it is intended to indicate that a first element is arranged above or below a second element when the first element is arranged at a height, with respect to the ground, respectively higher or lower than the height at which the second element is arranged.

Advantageously, the grinding assembly 3, 4, 5, 16 comprises removable attachment means 6, 7, 40a, 40b, 41, 42a, 42b of the crushing rotor 5 to the driving shaft 4. Specifically, the attachment means 6, 7, 40a, 40b, 41, 42a, 42b comprise:
- at least a first attachment body 6 made on one of either the crushing rotor 5 or the driving shaft 4;
- at least a second attachment body 7 made on the other of either the crushing rotor 5 or the driving shaft 4 and couplable locked together in rotation with the first attachment body 6, the first attachment body 6 and the second attachment body 7 being movable longitudinally with respect to each other along the axis of rotation A to allow disassembly of the crushing rotor 5 from the supporting frame 2;
- removable clamping means 40a, 40b, 41, 42a, 42b of the first attachment body 6 to the second attachment body 7 adapted to attach the mutual position thereof longitudinally along the axis of rotation A.

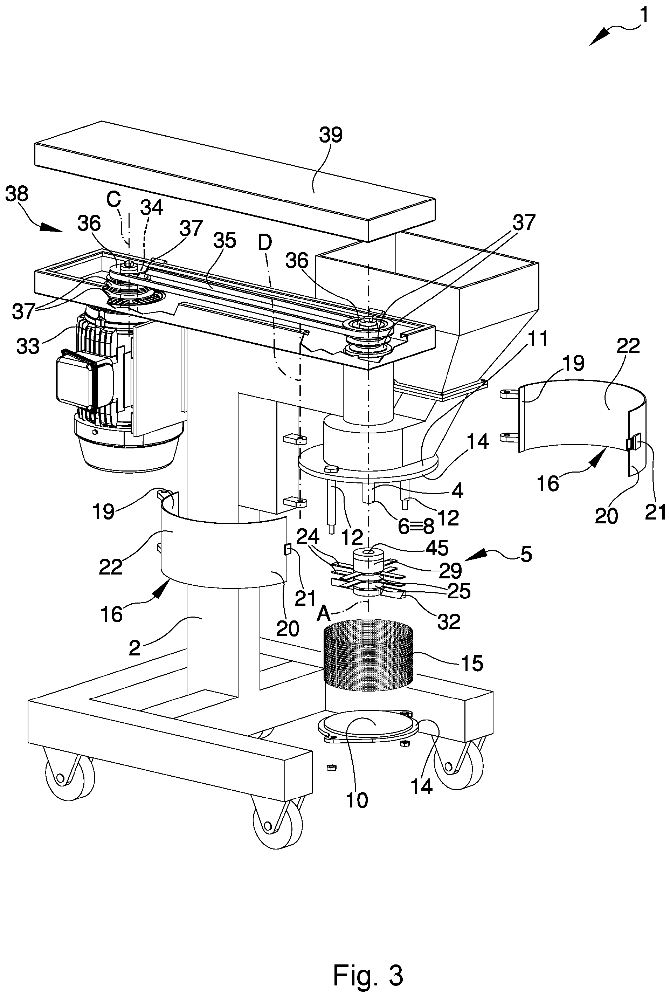

According to the embodiment of the mill 1 shown in the figures, the first attachment body 6 is preferably made in a single body piece with the driving shaft 4 and coincides with the lower end 8 of the same, that is, the end of the driving shaft 4 facing the ground, as shown in Figure 3.

In fact, the driving shaft 4 advantageously comprises an upper end substantially opposite the lower end 8 and associated movable in rotation around the axis of rotation A with the supporting frame 2.

The second attachment body 7, on the other hand, is preferably a hollow body associated with the crushing rotor 5 and defining a housing 45 that develops, in use, along the axis of rotation A.

Preferably, the first and the second attachment bodies 7, 8 have a cross section, defined with respect to the axis of rotation A, which is substantially circular in shape and have conformations that are substantially complementary to each other so as to make a kinematic torque of the cylindrical type.

Conveniently, the attachment means 6, 7, 40a, 40b, 41, 42a, 42b comprise removable blocking means (not shown in the figure) for blocking the mutual rotation of the elements of the above kinematic torque adapted to couple the same locked together in rotation with each other.

In this way, the blocking means prevent the first and the second attachment bodies 7, 8 from mutually rotating and the clamping means 40a, 40b, 41, 42a, 42b clamp their mutual sliding along the axis of rotation A.

In other words, the blocking means and the clamping means 40a, 40b, 41, 42a, 42b operate in conjunction with each other so that the driving shaft 4 can be coupled to the crushing rotor 5 in a removable manner which, in use, is properly housed at the center of the grinding chamber 3.

Specifically, the grinding chamber 3 comprises at least one base body 10 associable with the supporting frame 2 in a removable manner and arranged substantially parallel to the ground to inferiorly bound the grinding chamber 3.

Preferably, the supporting frame 2 comprises a flange body 11 arranged above the base body 10 and substantially opposite the same, bounding the grinding chamber 3 at the top and defining an inlet opening for the raw material within the grinding chamber itself. Specifically, the mill 1 preferably comprises a loading assembly 43 defining at least one loading port for the raw material to be ground and provided with at least one channel for conveying the raw material from the loading port to the inlet opening.

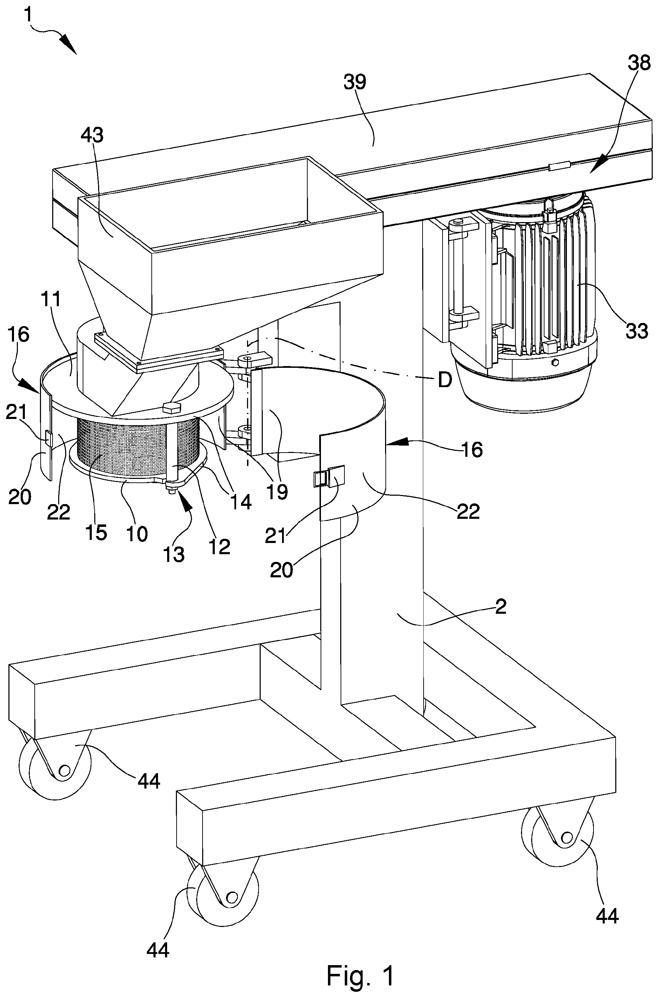

According to the invention, the mill 1 comprises at least one pair of lateral supporting elements 12 arranged substantially parallel to each other and associated with the flange body 11, from which they extend vertically cantilevered towards the ground until they fasten to the base body 10, as shown in Figure 1.

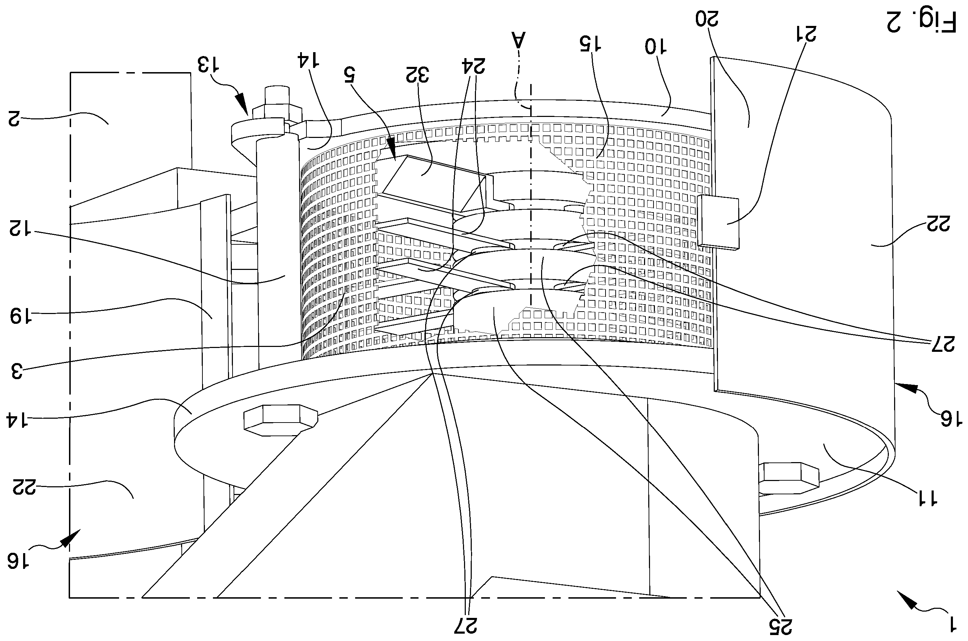

Advantageously, the flange body 11 and the base body 10 are provided with at least one perimeter profile 14 arranged outside the grinding chamber 3 and at which the lateral supporting elements 12 are associated, which in turn are so arranged outside the grinding chamber 3, as shown in Figures 1 and 2.

In this way, the lateral supporting elements 12 do not interfere with the crushing rotor 5. In addition, the mill 1 comprises removable fastening/release means 13 of the base body 10 from the supporting frame 2.

According to the embodiment of the mill 1 shown in the figures, the fastening/release means 13 comprise at least one pair of recesses made opposite each other on the perimeter profile 14 of the base body 10 and at least one attachment element made on the ground-facing extremal portion of each of the supporting elements 12. Specifically, each of the attachment elements is adapted to operate in conjunction with a corresponding recess to fix the position of the base body 10 in a removable manner, as shown in Figure 2.

Appropriately, the grinding chamber 3 comprises at least one lateral grid 15 associated between the base body 10 and the supporting frame 2 in a removable manner to laterally surround the crushing rotor 5 at 360°.

More specifically, the lateral grid 15 is arranged to rest on the perimeter profile 14 of the base body 10 and abuts against the perimeter profile 14 of the flange body 11 to laterally bound the grinding chamber 3, as shown in Figure 2.

Advantageously, the lateral grid 15 comprises a plurality of passage holes adapted to define the particle size of the animal feed coming out of the grinding chamber 3.

In fact, the raw material ground within the grinding chamber 3 is able to pass through the lateral grid 15 only at the moment when the grains composing it reach a particle size having a comparable extension to that of the passage holes.

In addition, the mill 1 conveniently comprises a plurality of lateral grids 15 provided with passage holes having different extensions.

In this way, it is possible to vary the particle size of the animal feed produced depending on the lateral grid mounted on the mill 1.

According to the embodiment of the mill 1 shown in the figures, the lateral grid 15 is of substantially cylindrical hollow conformation and the flange body 11 and the base body 10 are of substantially circular conformation, so as to seal the lateral grid 15 above and below respectively, thus defining with the latter a grinding chamber 3 of substantially cylindrical conformation surrounding the crushing rotor 5, as shown in Figure 2. Conveniently, the grinding assembly 3, 4, 5, 16 comprises at least one lateral retaining body 16 associated with the supporting frame 2 arranged, in use, around the lateral grid 15 and spaced apart from the latter to define an unloading gap for the ground raw material passing through the lateral grid 15.

Preferably, the lateral retaining body 16 is of substantially cylindrical conformation and is arranged, in use, concentric to the grinding chamber 3.

Specifically, the lateral retaining body 16 comprises at least one pair of containment walls 19, 20, 21 associated with the supporting frame 2 in a movable manner between at least a first configuration of work, in which the containment walls 19, 20, 21 are moved away from each other and the lateral grid 15 is accessible from the outside, and at least a second configuration of work, in which the containment walls 19, 20, 21 are moved closer to each other to surround the lateral grid 15, defining the unloading gap and making the lateral grid 15 inaccessible from the outside.

According to the embodiment of the mill 1 shown in the figures, each of the containment walls 19, 20, 21 comprises:
- at least a first extremal portion 19 hinged to the supporting frame 2 and movable in rotation around an axis of hinging D arranged substantially parallel to the axis of rotation A to allow the movement of the containment wall 18 between the first and the second configurations of work;
- at least a second extremal portion 20 adapted to abut against the second extremal portion 20 of the other of the containment walls 19, 20, 21 in the second configuration of work;
- removable coupling means 21 of the second extremal portions 20 adapted to secure the pair of containment walls 19, 20, 21 in the second configuration of work in a removable manner.

Advantageously, the containment walls 19, 20, 21 comprise at least one abutment sidewall 22 of substantially curved sheet-like conformation and placed between the first and the second extremal portions 19, 20.

Specifically, in the second configuration of work, the abutment sidewall 22 is arranged facing the lateral grid 15, with which it bounds the unloading gap laterally and abuts against the flange body 11 at its perimeter profile 14, with which it bounds the unloading gap at the top.

In addition, in the configuration of work, the abutment sidewall 22 is spaced apart from the perimeter profile 14 of the base body 10, with which it defines an unloading gap for the ground raw material.

Preferably, the coupling means 21 are made at the second extremal portions 20. Optionally, the grinding assembly 3, 4, 5, 16 may comprise at least one collection body associated with the grinding chamber 3 in a removable manner below the unloading gap so as to collect the ground raw material, e.g. a bucket.

Advantageously, the crushing rotor 5 comprises at least one fixed body 25, 26, 27 locked together in rotation with the driving shaft 4 and at least one crushing element 24 kinematically coupled idle in rotation to the fixed body 25, 26, 27.

Preferably, the fixed body 25, 26, 27 comprises a set of retaining plates 25 arranged opposite and parallel to each other and centered, in use, along the horizontal axis of rotation, where one or more of the crushing elements 24 are placed and pivoted free to rotate between the retaining plates 25.

In addition, each of the retaining plates 25 is centrally drilled to make at least part of the housing 45 for the driving shaft 4.

Preferably, the retaining plates 25 are circular discs made of metal.

Instead, the crushing elements 24 are preferably hammers made of metal and adapted to crush the raw material introduced within the grinding chamber 3.

Advantageously, the fixed body 25, 26, 27 comprises the alignment means 26 of the retaining plates 25 adapted to keep the latter aligned with each other along the axis of rotation A.

According to the embodiment of the mill 1 shown in the figures, the alignment means 26 comprise at least one pair of through holes (not shown in the figures) drilled on each retaining plate 25 at an off-center position from the center of the retaining plate 25.

In addition, the alignment means 26 comprise at least one pair of containment pins 28 adapted to pass through the holes of each retaining plate 25, keeping the latter centered along the axis of rotation A.

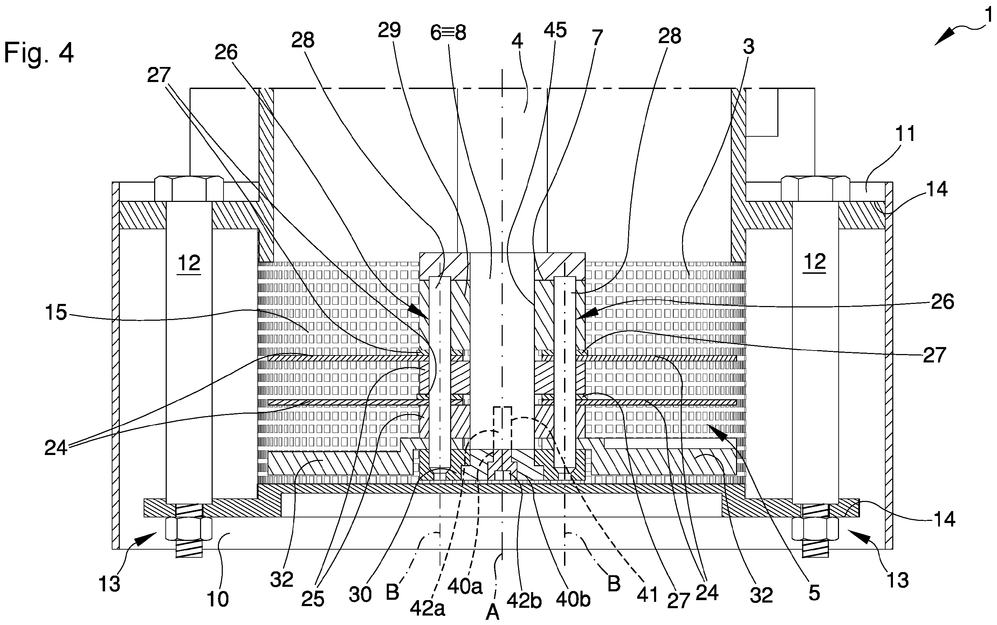

This expedient allows the crushing elements 24 pivoted movable in rotation along the containment pins 28 to be arranged between the retaining plates 25, as shown in Figure 4.

Specifically, the containment pins 28 extend longitudinally centered along a corresponding axis of pivoting B arranged, in use, substantially parallel to the axis of rotation A and around which the crushing elements 24 rotate.

In addition, the holes are made aligned, transverse to the axis of pivoting B, and equidistant from the center of the retaining plate 25, so that the crushing elements 24 are arranged opposite each other, giving the crushing rotor 5 a structure that is substantially symmetrical with respect to the axis of rotation A.

Preferably, according to the embodiment of the mill 1 shown in the figures, the alignment means 26 comprise two pairs of holes and two pairs of containment pins 28, where each pair of holes and each pair of containment pins 28 is arranged rotated by 90° with respect to the other pair of holes and to the other pair of containment pins 28.

In addition, the crushing elements 24 pivoted to different pairs of containment pins 28 are arranged, in use, at different heights.

In particular, the fixed body 25, 26, 27 comprises spacer elements 27 placed between the crushing elements 24 and at least one corresponding retaining plate 25, and adapted to define the height difference between the crushing elements 24 pivoted at different pairs of containment pins 28.

This expedient allows the crushing elements 24 pivoted in pairs of containment pins 28 to never collide with each other, e.g., during the start-up and stop phases of the crushing rotor 5.

According to the embodiment of the mill 1 shown in the figures, the crushing rotor 5 comprises at least one upper retaining body 29 and at least one lower retaining body arranged opposite each other at the extremal retaining plates 25 of the fixed body 25, 26, 27, bounding the longitudinal extension of the same along the axis of rotation A.

In particular, the upper retaining body 29 and the lower retaining body are adapted to operate in conjunction with each other to fix the position of the retaining plates 25 and of the corresponding crushing elements 24 longitudinally along the axis of rotation A, so as to make a crushing rotor 5 having a compact and balanced structure.

Preferably, the upper retaining body 29, the lower retaining body and the retaining plates 25 coincide with the second attachment body 7 and define the housing 45 of the driving shaft 4, in this case of the first attachment body 6, as shown in Figure 4.

In fact, according to the embodiment of the mill 1 shown in the figures, the lower retaining body comprises a bottom plate 30 centered along the axis of rotation A and associated with the containment pins 28 at their extremal portions in a removable manner, so as to bound the housing 45 below, as shown in Figure 4.

Specifically, the clamping means 40a, 40b, 41, 42a, 42b clamp the bottom plate 30 to the first attachment body 6 in a removable manner.

In addition, the clamping means 40a, 40b, 41, 42a, 42b preferably comprise at least a first through opening 40a, 40b made centrally to the bottom plate 30 and at least a second opening 41 made centrally to the first attachment body 6 and arranged, in use, coaxial to the first opening 40a, 40b.

In addition, the clamping means 40a, 40b, 41, 42a, 42b also comprise a blocking element 42a, 42b which is associable with the first and with the second attachment bodies 6, 7 in a removable manner through the first and the second openings 40a, 40b, 41, blocking the mutual position thereof longitudinally along the axis of rotation A.

Specifically, the blocking element 42a, 42b comprises at least one elongated portion 42a insertable through the first and the second openings 40a, 40b, 41 and at least one expanded portion 42b having a larger size than the elongated portion 42a and adapted to abut against the outer surface of the bottom plate 30 when the elongated portion 42a is fitted through the first and second openings 40a, 40b, 41.

In addition, the first opening 40a, 40b comprises at least a first and a second stretch 40a, 40b having a substantially complementary conformation to the elongated portion 42a and to the expanded portion 42b, respectively.

In this way, in use, the expanded portion 42b is placed within the second stretch 40b abutting against the bottom plate 30 at the mouth of the first stretch 40a, so that the outer surface of the bottom plate 30 is substantially flat and has no protuberances, as shown in Figure 4.

Advantageously, the crushing rotor 5 comprises at least one creeping body 32 kinematically coupled idle in rotation to the fixed body 25, 26, 27 and arranged in creeping contact on the base body 10.

Specifically, the crushing rotor 5 comprises a pair of creeping bodies 32 pivoted along the corresponding containment pins 28 and placed between the bottom plate 30 and one of the retaining plates 25.

Conveniently, the creeping bodies 32 comprise at least one horizontal flat face and at least one inclined flat face extending radially with respect to the axis of rotation A.

In particular, the horizontal flat face and the inclined flat face are continuous with each other to define at least one wedge-shaped profile arranged to rest on the base body 10 and to scrape the surface thereof, removing any remnants of raw material that may be deposited thereon.

In fact, very frequently, due to the heat that develops within the grinding chamber 3 during the operation of the mill 1 and due to ambient humidity, some of the raw material may stick to the base body 10.

Conveniently, the mill 1 comprises movement means 33, 34, 35, 36 of the driving shaft 4 mounted on the supporting frame 2 and comprising:
- at least one motor assembly 33, 34;
- transmission means 35, 36 placed between the motor assembly 33, 34 and the driving shaft 4 and adapted to transmit the motion generated by the motor assembly 33, 34 to the driving shaft 4;
- adjustment means of the transmission ratio of motion between the motor assembly 33, 34 and the driving shaft 4 placed between the transmission means 35, 36 and at least one of the motor assembly 33, 34 and the driving shaft 4.

Preferably, the motor assembly 33, 34 comprises at least a supporting body 33 associated with the supporting frame 2 and a rotating shaft element 34 associated with the supporting body 33 and rotating with respect to the latter around a central axis C arranged substantially parallel to the axis of rotation A.

In particular, the transmission means 35, 36 comprise at least one flexible member 35 closed on itself in a loop and wound at least partly around two pulleys 36, one of which being associated with the motor assembly 33, 34 and another of which being associated with the driving shaft 4.

On the contrary, the adjustment means comprise a plurality of grooves 37 for housing the flexible member 35 cut on at least one of the pulleys 36 and having different diameters from each other.

Advantageously, one pulley 36 is locked together in rotation with the shaft element 34 and is centered along the central axis C, and the other pulley 36 is locked together in rotation with the driving shaft 4 at the upper end and is centered along the axis of rotation A.

Specifically, the grooves 37 of the pulley 36 associated with the driving shaft 4 are made with increasing diameter starting from the upper end.

In contrast, the grooves 37 of the pulley 36 associated with the motor assembly 33, 34 are made with decreasing diameter starting from the shaft element 34.

In addition, the pulleys 36 appropriately comprise the same number of grooves 37, where each groove 37 of a pulley 36 is arranged at the same height as a groove 37 of the other pulley 36 having a different diameter, as shown in Figure 3.

In other words, the groove 37 having minimum diameter of one pulley 36 is arranged at the same height as the groove 37 having maximum diameter of the other pulley 36 and vice versa.

Advantageously, the supporting frame 2 comprises at least one compartment 38 for containing at least part of the movement means 33, 34, 35, 36 and provided with at least one opening/closing door 39 adapted to allow or prevent access to the movement means 33, 34, 35, 36 respectively, e.g. for the purpose of protecting them from foreign objects that could be accidentally introduced inside the compartment 38 and that could impair the operation of the mill 1.

In more detail, the compartment 38 contains the upper end, at least part of the shaft element 34, the respective pulleys 36 and the flexible member 35, as shown in Figure 3. Advantageously, the supporting frame 2 also comprises a plurality of wheels 44 for support and movement to the ground, as shown in Figures 1 and 3.

In particular, according to the embodiment of the mill 1 shown in the figures and in accordance with the structure of the mill 1 previously described, the characteristics of the components that bound and define the grinding chamber 3, as well as the characteristics of the driving shaft 4 and of the crushing rotor 5 and the layout of the axis of rotation A, allow making a very lightweight mill 1 and to arrange the grinding chamber at a particularly high elevation above the ground compared with the mills of the known type.

In fact, thanks to these features, the grinding chamber can be placed above the pelvis of a person of average build, further facilitating mill maintenance operations and the collection of the ground raw material.

The operation of the mill 1 according to the invention is as follows.

Initially, it is necessary to place the raw material to be ground within the grinding chamber 3 through the loading assembly 43.

Next, the driving shaft 4 is set in rotation through the movement means 33, 34, 35, 36. In particular, the rotational speed of the driving shaft 4 and consequently of the crushing rotor 5 depends on the diameter of the grooves 37 to which the flexible member 35 is wound.

In fact, the rotational speed of the driving shaft 4 increases as the diameter of the groove 37 of the pulley 36 associated with the driving shaft 4 increases with respect to the diameter of groove 37 of the pulley 36 associated with the shaft element 34.

In other words, the maximum rotational speed of the driving shaft 4 is reached in the case of winding the flexible member 35 to the groove 37 of the pulley 36 associated with the driving shaft 4 having maximum diameter and to the groove 37 of the pulley associated with the shaft element 34 having minimum diameter.

Advantageously, the speed of the driving shaft 4 can be varied by opening the compartment 38 and winding the flexible member 35 to a pair of different grooves 37. Appropriately, the rotation of the driving shaft 4 causes the rotation of the crushing rotor 5 arranged within the grinding chamber 3.

During the rotation of the crushing rotor 5, the crushing elements 24, subjected to the action of the centrifugal force, rotate around their respective containment pins 28 and arrange themselves radially with respect to the axis of rotation A to occupy substantially the entire volume of the grinding chamber 3.

Similarly to what has just been described with reference to the crushing elements 5, the creeping bodies 32 also arrange themselves radially with respect to the axis of rotation A, sweeping substantially the entire surface of the base body 10 on which they creep. In addition, the centrifugal force exerted on the crushing elements 24 and on the creeping bodies 32, as a result of the rotation of the crushing rotor 5, is uncoupled from the weight force acting thereon.

In fact, the centrifugal force acts on the crushing elements 24 and on the creeping bodies 32 radially with respect to the axis of rotation A and the weight force acts thereon longitudinally along the axis of rotation A.

In this way, unlike the known mills having a horizontal axis of rotation, the weight force does not push the crushing elements 24 and the creeping bodies 32 to hit the fixed body 25, 26, 27, e.g. during the starting and stopping phases of the rotation of the crushing rotor 5.

During the rotation of the crushing rotor 5, the raw material contained within the grinding chamber 3 is crushed by the crushing elements 24 until a raw material having a particle size so as to cross the lateral grid 15 is obtained.

Specifically, the raw material passing through the lateral grid 15 flows within the unloading gap along which it is conveyed by the lateral retaining body 16 until it reaches the unloading port.

Advantageously, during the idle period of the mill 1, maintenance of the grinding assembly 3, 4, 5, 16 can be carried out.

In particular, through the coupling means, it is possible to uncouple the second extremal portions 20 and to move the containment walls 19, 20, 21 to the first configuration of work.

In this configuration, it is possible to remove the base body 10 through the fastening/release means 13.

At the same time, the lateral grid 15 can be removed, e.g., to replace it with one having differently sized passage holes or to access the crushing rotor 5.

In fact, in this configuration, it is possible to release the crushing rotor 5 from the driving shaft 4 without releasing the latter from the supporting frame 2.

In particular, the first and the second attachment bodies 7, 8 can be uncoupled by means of the clamping means 40a, 40b, 41, 42a, 42b, i.e., it is possible to pull out the blocking element 42a, 42b from the first opening and from the second opening 41, so that the second attachment body 7 is allowed to slide with respect to the first attachment body 6. In addition, the mill 1 of the present disclosure comprises a mixing chamber 46. Specifically, the grinding assembly 3, 4, 5, 16 comprises a mixing chamber 46 in fluid communication with the grinding chamber 3 and with the loading assembly 43. The mixing chamber 46 is in fluid communication with the raw material conveying channel of the loading assembly 43. The inlet opening 47 of the grinding assembly is defined at the mixing chamber 46. In detail, the mixing chamber 46 is set in fluid communication with the loading assembly by means of the inlet opening 47. The inlet opening 47 is adapted to receive the raw material, specifically the raw material to be mixed.

The mixing chamber 46 is configured to receive the raw material from the loading assembly 43 and to send a mixed raw material to the grinding chamber 3. In other words, the mixing chamber 46 is placed between the loading assembly 43 and the grinding chamber 3 to receive the raw material, to mix the raw material and to send the mixed raw material to the grinding chamber 3. The mixing chamber 46 can be contiguous with the grinding chamber 3. In detail, the mixing chamber 46 can be arranged upstream of the grinding chamber 3 along the vertical axis of rotation A.

In detail, the mixing chamber 46 can be suitable for a complete or partial mixing of the raw material. The raw material can be mixed fully or partly, and therefore pre-mixed, in the mixing chamber 46 before being fed to the grinding chamber 3.

Advantageously, mixing the raw material before it is conveyed to the grinding chamber 3 allows the hourly production of animal feed to be increased and the amount of dust in the finished product to be reduced. In addition, mixing the raw material results in a finished product that is more homogeneous in its composition.

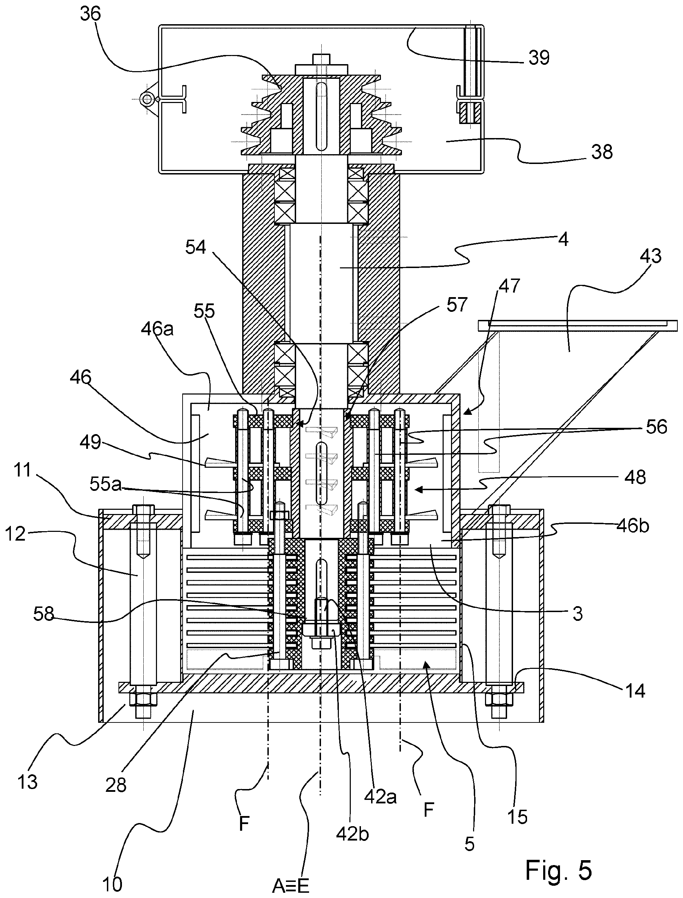

In one embodiment, the mixing chamber 46 extends between an upper part 46a and a lower part 46b along a longitudinal direction E. In detail, the longitudinal direction E is parallel to the axis of rotation A. The longitudinal direction E can be coincident with the vertical axis of rotation A of the driving shaft 4, such as shown in Figure 5.

According to one aspect, the driving shaft 4 is fitted at least partly within the mixing chamber 46. Specifically, the driving shaft 4 passes through the mixing chamber 46. The driving shaft 4 can extend along the entire length of the mixing chamber 46 between the upper part 46a and the lower part 46b along the longitudinal direction E towards the grinding chamber 3 and within the grinding chamber.

In one embodiment, the mill 1 comprises at least one mixing rotor 48 housed within the mixing chamber 46 and locked together in rotation with the driving shaft 4. In particular, the mutual rotation between the mixing rotor 48 and the driving shaft 4 can be prevented. In other words, in use, the mixing rotor 48 can rotate around the vertical axis of rotation A when the driving shaft 4 is set into rotation around the vertical axis of rotation A. The mixing rotor 48 can be coupled to the crushing rotor 5 so that they are both coupled locked together in rotation with the driving shaft.

According to one aspect, the mixing rotor 48 comprises at least one mixing element 49. The mixing element 49 is configured to rotate around the axis of rotation A and to bump and mix the raw material in the mixing chamber 46. The mixing element 49 may comprise a hammer adapted to bump, crush and mix the raw material. In particular, the mixing element 49 may comprise a hammer. The mixing element 49 is made of metal, preferably steel. The mixing element 49 is preferably made of steel S355JR.

In one embodiment, the mixing element 49 comprises a first portion 50 and a second portion 51 adjacent to the first portion 50. In detail, the first portion 50 and the second portion 51 are connected to each other and define the mixing element 49. The mixing element 49 may consist of the first portion and of the second portion. The first portion 50 substantially develops along a first plane. The second portion 51 substantially develops along a second plane which is transverse to the first plane so as to define an interposed angle. The extension of the modular element 49 outside the first plane and the second plane is smaller compared to the extension along the first and second planes. In use, the first plane is transverse to the axis of rotation A and/or to the longitudinal direction E of extension of the mixing chamber. The first plane can be horizontal.

In detail, the first plane and the second plane define an angle placed between them. The interposed angle between them can be of between 135° and 170°. Preferably, the angle is of between 150° and 165°. In one embodiment, the angle interposed between the first plane and the second plane is equal to 150° or equal to 165°. In other words, the second plane can be inclined with respect to the first plane by an angle of between 45° and 10°, preferably of between 30° and 15°, still preferably equal to 15° or 30°.

According to one aspect, the mixing element 49 extends between a connecting end 52 and an opposite folded end 53. The connecting end 52 and the opposite folded end 53 are defined by the first portion 50 and by the second portion 51 respectively. In other words, the opposite folded end is folded with respect to the first portion towards the end. In detail, the connecting end 52 is adapted to be coupled to the driving shaft 4. The opposite folded end is adapted to contact and/or bump the raw material within the mixing chamber. In other words, the mixing element 49 is configured to bump the raw material at the opposite folded end.

Advantageously, the mixing element 49 with a folded end developing substantially along the second plane allows promoting the crushing, mixing and conveying operations of the mixed raw material to the grinding chamber, thus increasing the mill's productivity and the quality of the animal feed.

In one embodiment, the mixing rotor 48 comprises a pair of mixing elements 49, wherein the interposed angle and/or the opposite folded end of one of the mixing elements 49 of the pair faces the upper part 46a of the mixing chamber 46 and the interposed angle and/or the opposite folded end of the other of the mixing elements 49 of the pair faces the lower part 46b of the mixing chamber 46. In other words, the opposite folded end of each mixing element 49 may face either the upper part 49a or the lower part 49b of the mixing chamber 49.

In detail, the mixing rotor 48 comprises a plurality of mixing elements 49 wherein each mixing element 49 is in accordance with the present disclosure. In particular, the mill may have a set of mixing elements 49 with the opposite folded end 53 facing the upper part 46a of the mixing chamber 46 and a further set of mixing elements 49 with the opposite folded end 53 facing the lower part 46b of the mixing chamber 46. In other words, the mixing elements 49 may include a set of mixing elements 49 wherein the interposed angle faces the upper part 46a and a further set of mixing elements wherein the angle interposed between the first plane and the second plane faces the lower part 46b of the mixing chamber 46.

According to one aspect, the mixing rotor 48 may comprise a pair of mixing elements 49 arranged along the same plane which is transverse to the axis of rotation A and/or transverse to the longitudinal direction E of extension of the mixing chamber 46. In particular, the mixing rotor 49 comprises mixing elements 49 arranged along the same plane which is perpendicular to the axis of rotation A. In other words, the mixing elements 49 arranged along the same plane which is transverse to the axis of rotation A have their respective first planes parallel and/or coincident. The mixing elements arranged along the same plane which is transverse to the vertical axis of rotation may be placed at the same distance from the upper part 46a and/or from the lower part 46b of the mixing chamber 46.

The mixing rotor 48 may also comprise a pair of mixing elements 49 arranged on respective and separate planes which are transverse to the axis of rotation A. Thus, the mixing elements 49 may be arranged so that the respective first planes of the respective first portions 50 are not parallel and/or coincident with each other. The mixing elements 49 may have a different position and/or distance with respect to the upper portion or lower portion of the mixing chamber 46. The mixing elements may be placed at different heights with respect to the vertical axis of rotation A.

The plurality of mixing elements 49 may comprise mixing elements 49 arranged along the same plane and other mixing elements 49 arranged along different and separate planes which are transverse to the axis of rotation A.

The mixing elements 49 can be spaced apart from each other vertically and/or horizontally. The mixing elements 49 can be placed and spaced apart from each other along a vertical direction and/or along the axis of rotation A. The mixing elements 49 can also be placed along the same horizontal direction and spaced apart along that horizontal direction.

In one embodiment, the mixing rotor 48 comprises at least one pair of mixing elements 49 arranged around the axis of rotation A angularly spaced apart from each other. The mixing elements 49 may be angularly spaced apart by 90° from each other around the vertical axis of rotation A.

In detail, the mixing rotor comprises groups of mixing elements 49 arranged along the same plane which is transverse to the axis of rotation A. The groups of mixing elements 49 can be spaced apart from each other along a vertical direction which is parallel to the axis of rotation A. The mixing elements 49 of each group of mixing elements 49 can be arranged around the vertical axis of rotation A and angularly spaced apart from each other. In detail, the mixing elements of each group are placed angularly spaced apart by 90° from each other. In more detail, each group of mixing elements comprises four mixing elements 49 arranged angularly spaced apart from each other around the axis of rotation A by 90°. In even more detail, each group of mixing elements 49 comprises a pair of mixing elements 49 with the opposite folded end facing the upper part 46a of the mixing chamber 46 and a pair of mixing elements 49 with the opposite folded end 53 facing the lower part 46b of the mixing chamber 46.

In one embodiment, such as shown in Figure 5, the mixing rotor 48 comprises a number of mixing elements 49 equal to eight arranged around the vertical axis of rotation A. The eight mixing elements 49 are angularly spaced apart by 90° from each other in groups of two mixing elements 49 and spaced apart from each other along the axis of rotation A in groups of four.

In one embodiment, the mixing rotor 48 comprises a main body 54 locked together in rotation with the driving shaft 4. The main body 54 is adapted to transfer the rotational motion of the driving shaft 4 to the mixing element 49. Specifically, the main body 54 is configured to transmit the motion from the driving shaft 4 to each mixing element 49. Each mixing element 49 is configured to rotate around the vertical axis of rotation A when the mill is in use. In other words, the main body 54 and the driving shaft 4 are connected so that their mutual rotation is prevented.

In detail, the mixing element 49 can be rotating around the axis of rotation A with its own respective axis of rotation parallel to the vertical axis of rotation A. The axis of rotation of the mixing element 49 may be coincident with the vertical axis of rotation A or may be distinct from the same vertical axis of rotation A. For example, the main body 25 may be adapted and/or structurally configured to cause the mixing element 49 to carry out, in use, an elliptical trajectory around the driving shaft 4 or a circular trajectory around the driving shaft 4 not centered on the vertical axis of rotation A of the driving shaft 4.

According to one aspect, the mixing element 49 is connected to the main body 54 at the respective first portion 50. In detail, the mixing element 49 is connected to the main body 54 in the proximity of the connecting end 52.

Specifically, the mixing element 49 comprises at least one through hole 49a. The through hole 49a is arranged at the first portion 50. The through hole 49a may be positioned in the proximity of the connecting end 52. The through hole 49a of the mixing element 49 is adapted to connect the mixing element 49 to the main body 54. In detail, the mixing element 49 comprises a pair of through holes 49a to enable the removable connection of the mixing element 49 to the main body 54.

In one embodiment, the main body 54 comprises at least one connecting plate 55 for connection to at least one mixing element 49. In detail, the connecting plate 55 can be configured for connection to one group of mixing elements 49. The connection between the connecting plate 55 and one or more mixing elements 49 is a removable connection. The connecting plate 55 can be suitable for connection to a group of mixing elements 49 so that they are all arranged along the same plane which is transverse to the axis of rotation A.

Specifically, the connecting plate has a through hole 55a adapted to be associated with the through hole 49a of a respective mixing element 49. In one embodiment, the connecting plate 55 has a pair of through holes 55a wherein each through hole 55a of the pair of through holes 55a is associated with the through hole 49a of a respective and distinct mixing element 49.

According to one aspect, the connecting plate 55 may also comprise a pair of through holes 55a in which both through holes 55a of the pair are associated with the through holes 49a of the same mixing element 49. For example, where the mixing element 49 has a pair of respective through holes 49a, each through hole 55a of the pair of through holes 55a of the connecting plate 55 is suitable for connection to a respective through hole 49a of the mixing element 49.

According to one aspect, the connecting plate 55 may have a plurality of through holes 55a for connection to a plurality of mixing elements 49. For example, the connecting plate 55 may be configured for connection to the mixing elements 49 of a group of mixing elements 49. In other words, the connecting plate 55 may comprise a plurality of pairs of through holes 55a, wherein each pair of through holes 55a is associated with a respective and distinct mixing element 49.

According to one aspect, the main body 54 comprises a plurality of connecting plates 55, wherein each connecting plate 55 is configured for the removable connection of the mixing elements 49 of a group of mixing elements 49. More particularly, the connecting plates 55 are arranged along the longitudinal direction E of extension of the mixing chamber 46. More specifically, the connecting plates 55 are spaced apart from each other along the longitudinal direction E of extension of the mixing chamber 46. More specifically, the connecting plates 55 are arranged along and spaced apart from each other along the vertical axis of rotation A.

According to one aspect, the connecting plate 55 extends substantially transverse to the axis of rotation A. In detail, each connecting plate 55 is arranged perpendicularly to the axis of rotation A. The connecting plates 55 have a substantially circular shape. The connecting plate 55 is associable with the driving shaft 4 at one center of the connecting plate. The through holes 55a of the connecting plate can be arranged equally spaced apart from the center of the connecting plate 55.

In one embodiment, the mixing rotor 48 comprises a connecting pin 56 adapted to pass through and align the through hole 49a of a mixing element 49 and a respective through hole 55a of the connecting plate 55 so as to couple and connect the mixing element 49 to the main body 54 in a removable manner. The connecting pin 56 extends along a respective axis of extension F. The axis of extension F can be parallel to the axis of rotation A. In detail, the axis of extension F of the connecting pin 56 is vertical.

According to one aspect, the mixing rotor 48 comprises a pair of connecting pins 56 for coupling the mixing element 49 to the connecting plate 55. Specifically, each connecting pin 56 of the pair is associated with a respective through hole 49a of the mixing element 49 and with a respective through hole 55a of the connecting plate 55. For example, in the event of the mixing element 49 having a pair of through holes 49a, the mixing rotor 48 comprises a pair of connecting pins 56 associated with the pair of through holes 49a of the mixing element 49.

In detail, each connecting pin 56 may be associated with an individual mixing element 49 for the connection thereof to a connecting plate 55 and/or may be associated with more than one mixing element 49 for the connection thereof to distinct and respective connecting plates 55. In other words, each connecting pin 56 may be through an individual mixing element 49 and an individual connecting plate 55 or may be through at least two mixing elements 49 and at least two connecting plates 55.

According to one aspect, the main body 54 comprises a tubular element 57 suitable for connection to the driving shaft 4. Specifically, the tubular element 57 is connectable to the driving shaft 4 in a removable manner. The tubular element 57 extends along the longitudinal direction E of extension of the mixing chamber 46. The tubular element 57 extends between the upper part 46a and the lower part 46b of the mixing chamber 46. In detail, mutual rotation between the tubular element 57 and the driving shaft 4 can be prevented.

In detail, the connecting plate 55 is connected to the tubular element 57 and extends transversely to the axis of rotation A projecting from the tubular element 57 towards the inside of the mixing chamber 46. In detail, the connecting plate 55 is connected to the tubular element at the center of the connecting plate. The connection between each connecting plate 55 and the tubular element 57 can be removable so that each connecting plate 55 can be disconnected from the tubular element 57.

In one embodiment, the grinding assembly 3, 4, 5, 16 comprises removable attachment means of said mixing rotor 48 to the driving shaft 4 and/or to the crushing rotor 5. In other words, the mixing rotor 48 is connected to the driving shaft 4 and/or to the crushing rotor 5 in a removable manner by means of the attachment means.

According to one aspect, the main body 54 and the driving shaft 4 are movable longitudinally with respect to each other along the axis of rotation A. In particular, the tubular element 57 and the driving shaft 4 and/or the connecting plate 55 and the driving shaft are movable longitudinally with respect to each other along the vertical axis of rotation A.

Advantageously, it is possible to move the mixing rotor 48 with respect to the driving shaft 4 when necessary. For example, if the mixing rotor 48 malfunctions or is damaged, it is possible to remove the mixing rotor 48 from the mixing chamber 46 for maintenance or replacement.

In one embodiment, the attachment means of said mixing rotor 48 to the driving shaft 4 and/or to the crushing rotor 5 comprise removable clamping means of the main body 54 to the driving shaft 4 adapted to clamp the mutual position thereof longitudinally along the axis of rotation A. In particular, the clamping means are configured to clamp the position of the connecting plate 55 and/or of the tubular element 57 with respect to the driving shaft 4. In detail, the clamping means are adapted to clamp the position of each connecting plate 55 with respect to the driving shaft 4 along the axis of rotation A. According to one aspect, the attachment means of the main body 54 to the driving shaft 4 are configured to prevent the mutual rotation of the main body 54 and of the driving shaft 4 and the mutual sliding along the axis of rotation A. The attachment means allow the mixing rotor 48 to be coupled to the driving shaft 4 and/or to the crushing rotor 5 in a removable manner so that the mixing rotor 48 is, in use, housed within the mixing chamber 46.

According to one aspect, the attachment means connect the mixing rotor 46 to the crushing rotor 5. The connection between the mixing rotor 46 and the crushing rotor 5 can be removable and locked together in rotation. In other words, in use, the crushing rotor and the mixing rotor are set in motion around the vertical axis of rotation A simultaneously by means of the driving shaft 4.

In detail, the mixing rotor 46 is connected to the crushing rotor 5 by means of the connecting plate 55 or of one of the plurality of connecting plates 55. In more detail, a connecting plate 55 of the mixing rotor 46 may have an additional through hole associated with the alignment means 26, particularly associated with a containment pin 28. The containment pin 28 is adapted to pass through the holes of each retaining plate 25 arranged in the grinding chamber 3 and the hole of the connecting plate 55 arranged in the mixing chamber 46.

In one embodiment, such as the one shown in Figure 5, the lower retaining body does not bound the longitudinal extension of the crushing rotor 5 but is arranged at a distal position of the lower end of the crushing rotor 5. The lower retaining body is defined by the second attachment body 7 and comprises an abutment surface 58. The clamping means clamp the second attachment body 7 to the first attachment body 6 in a removable manner. The blocking element 42a, 42b comprises an expanded portion 42b and an elongated portion 42a. The expanded portion 42b of the blocking element 42a, 42b is adapted to abut against the abutment surface 58 of the crushing rotor, particularly of the second attachment body. The elongated portion 42a is configured to be fitted inside the driving shaft and coupled to the driving shaft 4 to attach the expanded portion in abutment against the abutment surface.

It has in practice been ascertained that the described invention achieves the intended objects.

Particularly noteworthy is the fact that the vertical axis of rotation allows the crushing rotor, the mixing rotor and the driving shaft to be uncoupled without disassembling the latter from the mill, by speeding up and simplifying maintenance operations of the crushing rotor.

In addition, the vertical axis of rotation allows uncoupling the centrifugal force exerted on the crushing elements, as a result of the rotation of the crushing rotor, and the weight force acting thereon.

What's more, the vertical axis of rotation allows employing a lateral grid that surrounds the grinding chamber at 360°.

In this way, for the same volume of the grinding chamber and the same size of the crushing rotor, the amount of animal feed produced in a predefined time frame is significantly higher than in mills of the known type, i.e., mills employing a horizontal axis of rotation.

In addition, the base body, the lateral grid and the lateral retaining body allow providing easy access to the grinding chamber and to the crushing rotor.

In addition, the adjustment means allow adjusting the speed of the driving shaft according to the needs of the mill user.

## Claims

1. Mill (1) for the production of animal feed comprising:
- at least one supporting frame (2);
- a loading assembly (43) connected to the supporting frame (2) and defining at least one loading port of the raw material;
- at least one grinding assembly (3, 4, 5, 16) mounted on said supporting frame (2) and provided with:
- at least one grinding chamber (3) for grinding at least one raw material to obtain food in granular form;
- at least one driving shaft (4) fitted at least partly within said grinding chamber (3) and operable in rotation around a vertical axis of rotation (A);
- at least one crushing rotor (5) housed within the grinding chamber (3) and associable locked together in rotation with the driving shaft (4);
**characterized by** the fact that the grinding assembly (3, 4, 5, 16) comprises a mixing chamber (46) in fluid communication with the grinding chamber (3) and the loading assembly (43), the mixing chamber (46) being configured to receive the raw material from the loading assembly (43) and to send a raw material mixed to the grinding chamber (3).

2. Mill (1) according to the preceding claim, wherein the driving shaft (4) is fitted at least partly within the mixing chamber (46), the mill (1) comprising at least one mixing rotor (48) housed within the mixing chamber (46) and associable locked together in rotation with the driving shaft (4).

3. Mill (1) according to one or more of the preceding claims, wherein the mixing rotor (48) comprises at least one mixing element (49), the mixing element (49) being configured to rotate around the axis of rotation (A) and to bump and mix the raw material in the mixing chamber (46).

4. Mill (1) according to the preceding claim, wherein the mixing element (49) comprises a first portion (50) developing substantially along a first plane and a second portion (51) adjacent to the first portion (50) developing substantially along a second plane which is transverse to the first plane so as to define an interposed angle.

5. Mill (1) according to the preceding claim, wherein the mixing element (49) extends between a connecting end (52) and an opposite folded end (53), the connecting end (52) and the opposite folded end (53) being defined by the first portion (50) and by the second portion (51), respectively.

6. Mill (1) according to claim 4 or 5, wherein the mixing chamber (46) extends between an upper part (46a) and a lower part (46b) along a longitudinal direction (E), the mixing rotor (48) comprising a pair of mixing elements (49), wherein the interposed angle and/or the opposite folded end of one of the mixing elements (49) of the pair faces the upper part (46a) of the mixing chamber (46) and the interposed angle and/or the opposite folded end of the other of the mixing elements (49) of the pair faces the lower part (46b) of the mixing chamber (46).

7. Mill (1) according to any one of claims 4 to 6, wherein the mixing rotor (48) comprises a main body (54) associable locked together in rotation with the driving shaft (4) and adapted to transfer the rotational motion of the driving shaft (4) to the mixing element (49), the mixing element (49) being connected to the main body (54) where the respective first portion (50) is located.

8. Mill (1) according to any one of claims 3 to 7, wherein the mixing rotor (48) comprises:
- a pair of mixing elements (49) arranged along the same plane which is transverse to the axis of rotation, and/or
- a pair of mixing elements (49) arranged on respective and separate planes which are transverse to the axis of rotation, and/or
- a pair of mixing elements (49) arranged around the axis of rotation angularly spaced apart from each other.

9. Mill (1) according to any one of the preceding claims 2 to 8, **characterized by** the fact that the grinding assembly (3, 4, 5, 16) comprises removable attachment means of said mixing rotor (48) onto the driving shaft (4) and/or onto the crushing rotor (5).

10. Mill (1) according to the preceding claim when dependent on claim 7, wherein the main body (54) and the driving shaft (4) are movable longitudinally with respect to each other along the axis of rotation (A), the attachment means comprising removable clamping means of the main body (54) to the driving shaft (4) adapted to clamp the mutual position thereof longitudinally along the axis of rotation (A).
